# EUROPÄISCHE PATENTSCHRIFT

(11) **EP 1 846 280 B1**
(45) Veröffentlichungstag und Bekanntmachung des Hinweises auf die Patenterteilung: **08.04.2009**
(21) Anmeldenummer: 05804108.8
(22) Anmeldetag: 18.10.2005
(51) Int. Cl.: B62D 25/10, B60J 5/04

(54) **KAROSSERIEKLAPPE FÜR KRAFTFAHRZEUGE, INSBESONDERE FÜR REISEBUSSE UND DERGLEICHEN**
CHASSIS HATCH FOR MOTOR VEHICLES IN PARTICULAR FOR TOURING COACHES AND SIMILAR
CAPOT DE CARROSSERIE POUR AUTOMOBILES, NOTAMMENT POUR AUTOCARS ET SIMILAIRES

(30) Priorität: 10.02.2005 DE 102005006278
(43) Veröffentlichungstag der Anmeldung: 24.10.2007
(73) Patentinhaber: Apt Oehme GmbH, 90542 Eckental-Brand (DE)
(72) Erfinder: GEMEIN, Stefan, 91220 Schnaittach (DE); KURVERS, Frans, NL-3093 WC Heythuysen (NL)
(74) Vertreter: Hafner, Dieter
(86) Internationale Anmeldenummer: PCT/DE2005/001860
(87) Internationale Veröffentlichungsnummer: WO 2006/084422

(56) Entgegenhaltungen:
- DE-A1- 4 431 243
- DE-A1- 10 354 371
- DE-U1- 9 108 211
- US-A- 5 605 371

## Beschreibung

Die Erfindung/Neuerung betrifft eine Karosserieklappe für Kraftfahrzeuge, insbesondere eine Karosserieklappe für Reisebusse. Eine klappe nach dem Oberbegriff des Anspruchs 1 ist aus der US 5 605 371 bekannt.

Reisebusse weisen im unteren Bereich ihrer Karosserie eine Mehrzahl von Klappen auf, mit welchen insbesondere Gepäckräume, Räume von Aggregaten, Motoren und dergleichen abgedeckt werden. Derartige Karosserieklappen bestehen aus einer Außenhautplatte und daran angeordneten Versteifungselementen nach Art von Rahmenteilen, die mit einer Seite der Außenhautplatte verbunden sind, wobei die Außenhautplatte aus einem Blechstanzteil gebildet wird, das im Randbereich zumindest abschnittsweise abgekantet oder gefalzt ist.

Die Versteifungselemente bekannter Karosserieklappen bestehen aus zusammengeschweißten Rohrrahmen, die mit der Außenhautplatte verschweißt, verschraubt oder vernietet sind. Derartige bekannte Konstruktionen sind relativ schwer und - was die Herstellung anbelangt - auch relativ aufwendig. Da derartige Karosserieklappen in der Regel auch aus unterschiedlichen Materialien bestehen, z.B. Aluminium- und Stahlelemente aufweisen, sind sie auch nur mit relativ großem Aufwand komplett recycelbar.

Der Erfindung liegt die Aufgabe zugrunde, eine Karosserieklappe für Kraftfahrzeuge, insbesondere eine Reisebusklappe, derart auszubilden, daß sie einfacher herstellbar, hinsichtlich ihres Gewichtes stark reduziert und einfach zu recyceln ist. Diese Aufgabe wird durch die kennzeichnenden Merkmale des Anspruches 1 gelöst, vorteilhafte Weiterbildungen ergeben sich aus den Unteransprüchen 2 -17 Gemäß Anspruch 18 betrifft die Erfindung auch noch ein Herstellungsverfahren für eine solche Karosserieklappe.

Als Kern der Erfindung wird es angesehen, aus Blechmaterial auch die Versteifungselemente herzustellen, die als Blechstanzteile ausgebildet sind und nach einem Biege-/Kantvorgang etwa die Form von langgestreckten Kästen haben. Im Anlagebereich zur Außenhautplatte weisen die Kästen nach außen abstehende Längslaschen auf, die als Klebeflächen dienen und die im Endmontagezustand der Karosserieklappe flächig mit Innenbereichen der Außenhautplatte verklebt sind. Erfindungstragend wird es damit angesehen, aus demselben Material, insbesondere aus Aluminiumblech alle Teile der Busklappe auszustanzen und die Versteifungselemente durch einen Biege-/Kantvorgang herzustellen und dann die Teile ausschließlich miteinander zu verkleben. Schweißvorgänge, Schraubvorgänge oder Nietverbindungsvorgänge können damit eingespart werden. Die erfindungsgemäße Karosserieklappe ist damit einfach herzustellen und auf einfache Weise zu recyceln. Teilweise können die Versteifungselemente und Abschnitte der Außenhautplatte auch formschlußbildend ineinander greifen, insbesondere im Bereich des unteren Randes der Platte. Im Bereich ihrer Oberkante weist die Außenhautplatte einen etwa ringartigen Falz auf, um eine Scharnierachse aufzunehmen. Die freie nach innen weisende Falzkante ist durch eine I-förmige Abkantung eines weiteren Versteifungselementes im Endmontagezustand beaufschlagt.

Die Längslaschen der oberen und unteren Rahmenteile bilden Aufdoppelungen der Außenhautplatte im Randbereich und wirken auf diese Weise besonders versteifend. Die Materialstärken der aus Aluminium bestehenden Außenhautplatte und die Materialstärke der Versteifungselemente beträgt 1,5 mm, ausgenommen das obere Versteifungselement im Scharnierbereich, das durch ein Blechstanzteil mit einer Blechstärke von 1 mm gebildet wird.

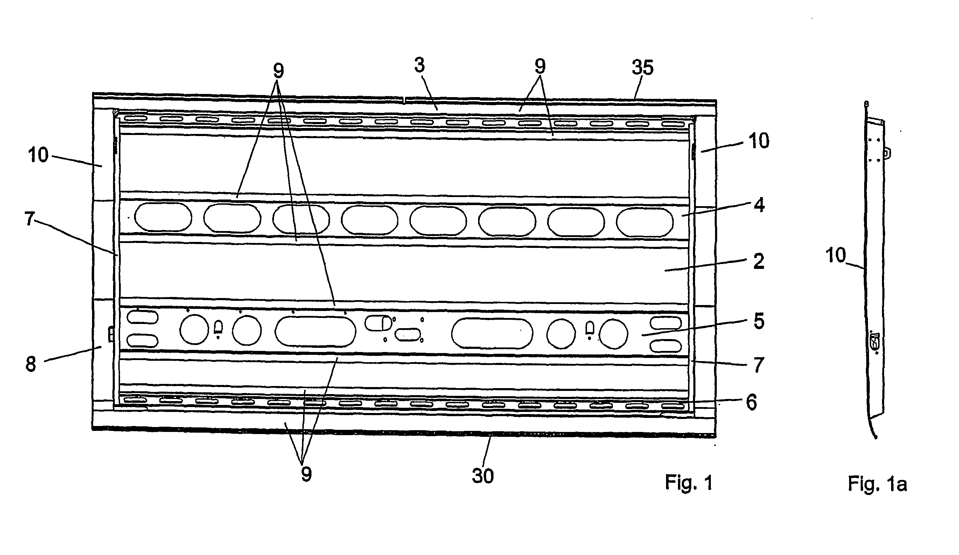

Die Erfindung ist anhand von Ausführungsbeispielen in den Zeichnungsfiguren näher erläutert. Diese zeigen
- Fig. 1: eine Draufsicht auf die Innenseite einer fertig montierten Karosserieklappe einer ersten Art;
- Fig. 1a: eine Seitenansicht der Karosserieklappe;

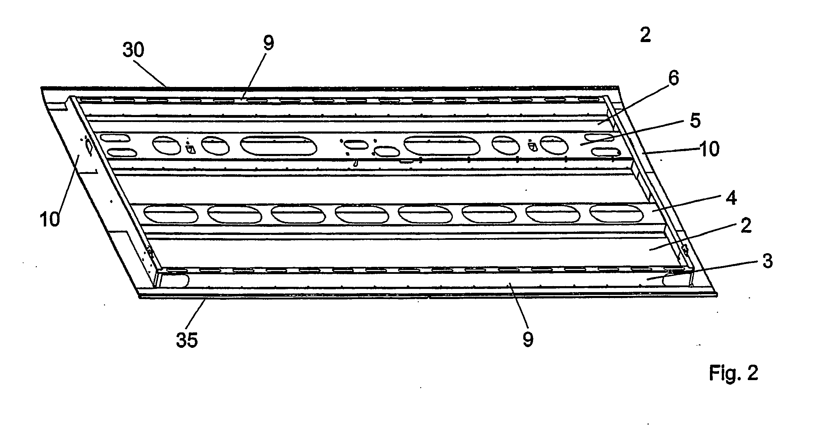

- Fig. 2: eine perspektivische Ansicht der fertig montierten Karosserieklappe gem. Fig. 1;

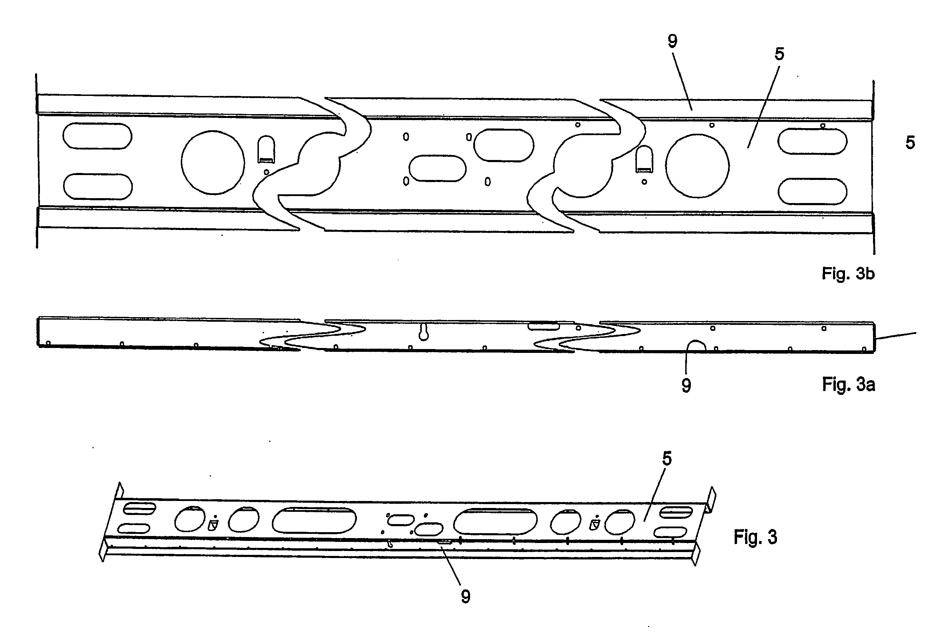

- Fig. 3: eine perspektivische Ansicht eines kastenartigen Versteifungselementes;
- Fig. 3a: eine Seitenansicht;
- Fig. 3b: eine Draufsicht;
- Fig. 3c: einen Schnitt durch das Versteifungselement gemäß Fig. 3;
- Fig. 4: ein Versteifungselement für den unteren Bereich der Karosserieklappe;
- Fig. 5: einen Schnitt durch das Versteifungselement gemäß Fig. 4;
- Fig. 6: eine Innenansicht der Außenhautplatte;
- Fig. 6a: einen Schnitt durch den oberen Kantenbereich (Scharnierbereich) der Außenhautplatte;
- Fig. 6b: einen Detailschnitt durch den unteren Kantenbereich der Außenhautplatte;
- Fig. 6c: einen Gesamtschnitt durch die Außenhautplatte;
- Fig. 6d: eine Ansicht der Außenhautplatte von unten;

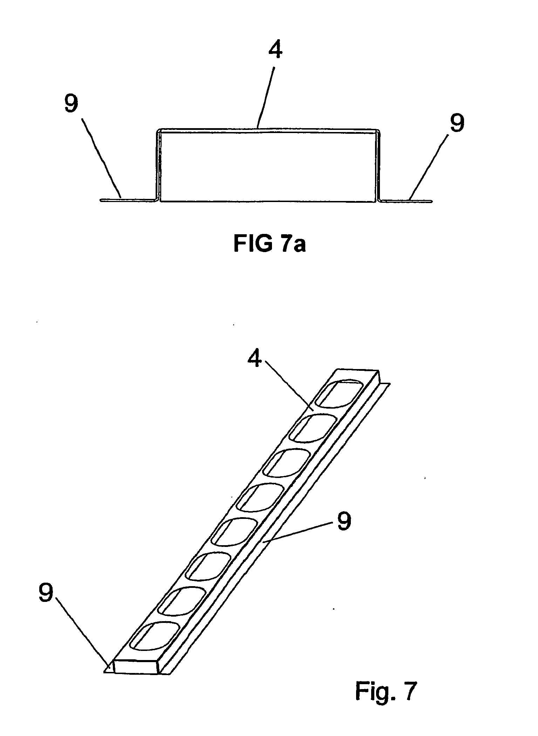

- Fig. 7: ein weiteres rahmenartiges Kastenteil;
- Fig. 7a: einen Querschnitt durch das Kastenteil gem. Fig. 7;

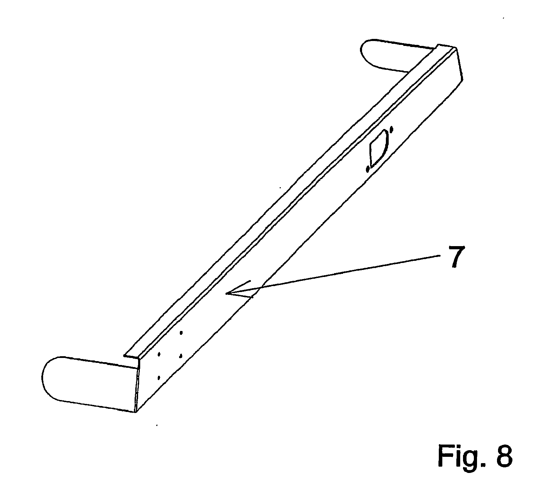

- Fig. 8: ein weiteres Versteifungsteil;
- Fig. 8a: ein Versteifungsteil rechtsstehig;

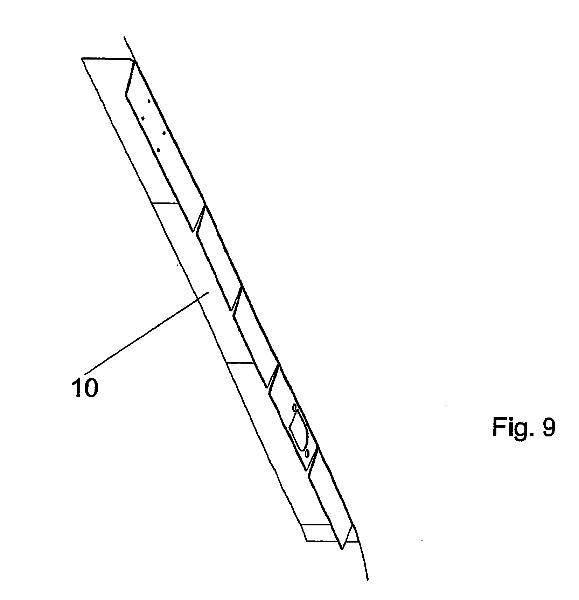

- Fig. 9: ein Versteifungsteil rechts lang;

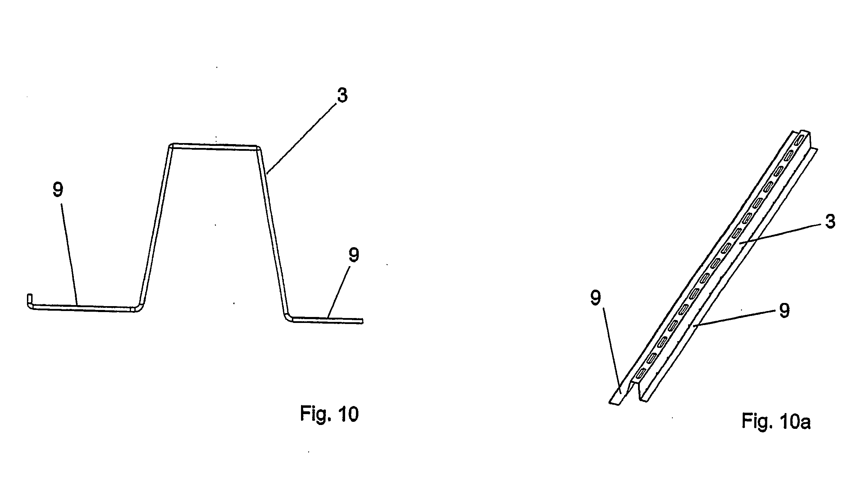

- Fig. 10: einen Querschnitt durch ein Versteifungsteil im Bereich der Oberkante;
- Fig. 10a: eine perspektivische Ansicht des Teils gem. Fig. 10;
- Fig. 11: eine Karosserieklappe einer zweiten Art mit einstückig ausgebildeten Versteifungselementen;

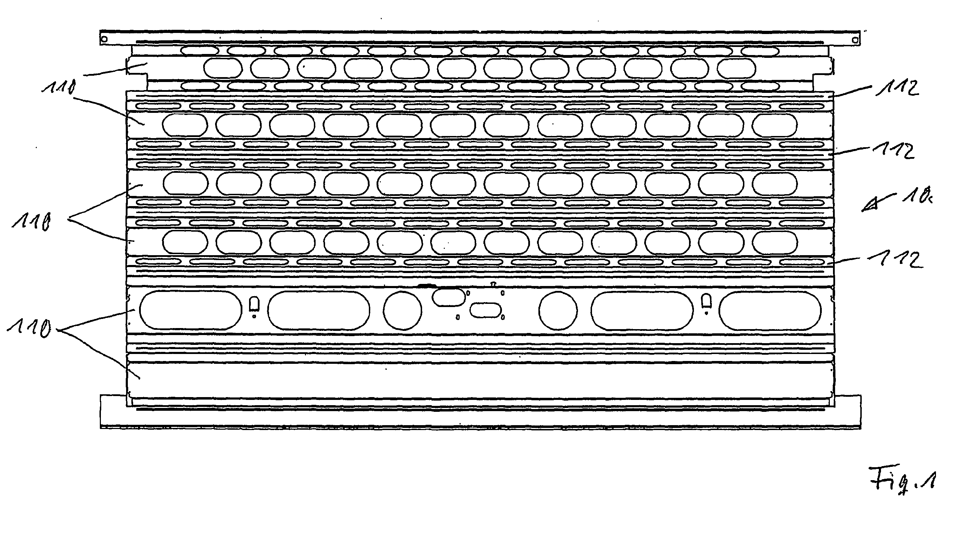

- Fig. 12: eine Draufsicht auf die Versteifungselemente gem. Fig. 11;

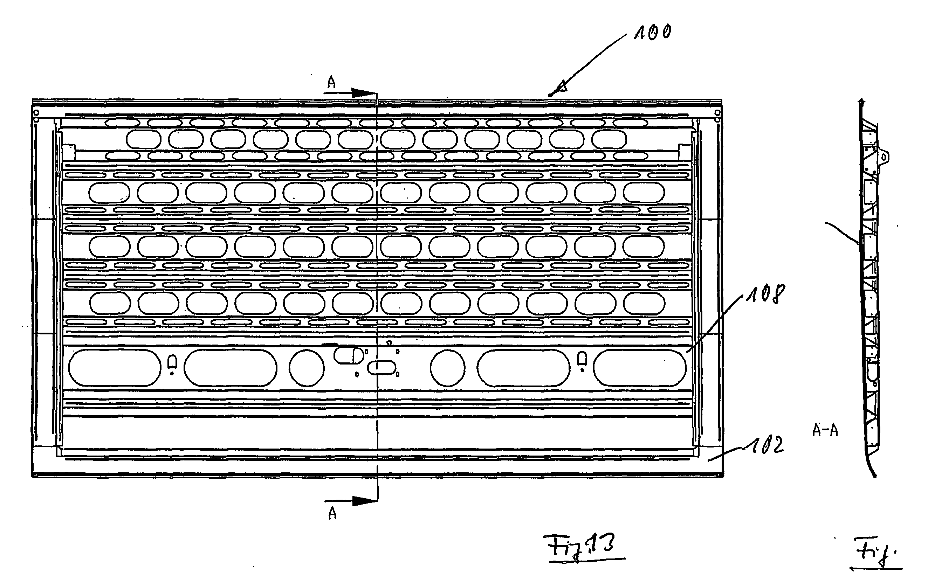

- Fig. 13: eine Draufsicht auf die in Fig. 11 dargestellte Karosserieklappe;
- Fig. 14: einen Schnitt A - H gem. Fig. 13;

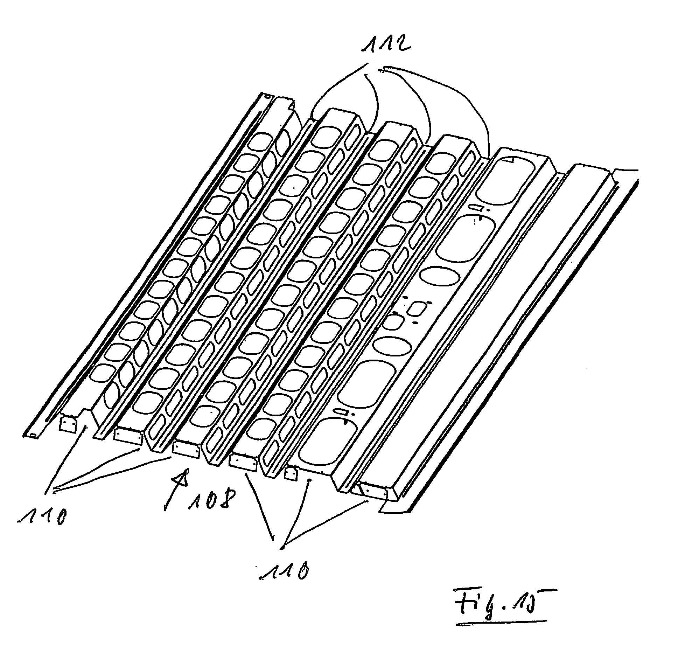

- Fig. 15: eine perspektivische Ansicht des Versteifungselementes gem. Fig. 12;
- Fig. 16: einen Teilschnitt durch das Versteifungselement gem. Fig. 15;
- Fig. 17: einen weiteren Schnitt durch das Versteifungselement gem. Fig. 15.

Die Karosserieklappe 1 besteht aus einer Außenhautplatte 2 und Versteifungselementen 3 - 8, die aus Blechstanzteilen gebildet sind und nach Art langgestreckter Kästen (Versteifungsteile 4 - 6) oder winkelartig ausgebildet sind. Alle Versteifungsteile weisen Klebeflächen auf, die als Längslaschen 9 ausgebildet sind oder als Winkelschenkel 10.

Wenn davon gesprochen wird, daß ein Teil der Versteifungselemente im Querschnitt etwa Ω-förmig ausgebildet ist, so soll damit ein Profil gemeint sein, wie es im Querschnitt in Zeichnungsfiguren 3c, 5, 7a oder 10 gezeigt ist, d.h. daß links und rechts von einem kastenartigen Profil die Längslaschen abstehen sollen.

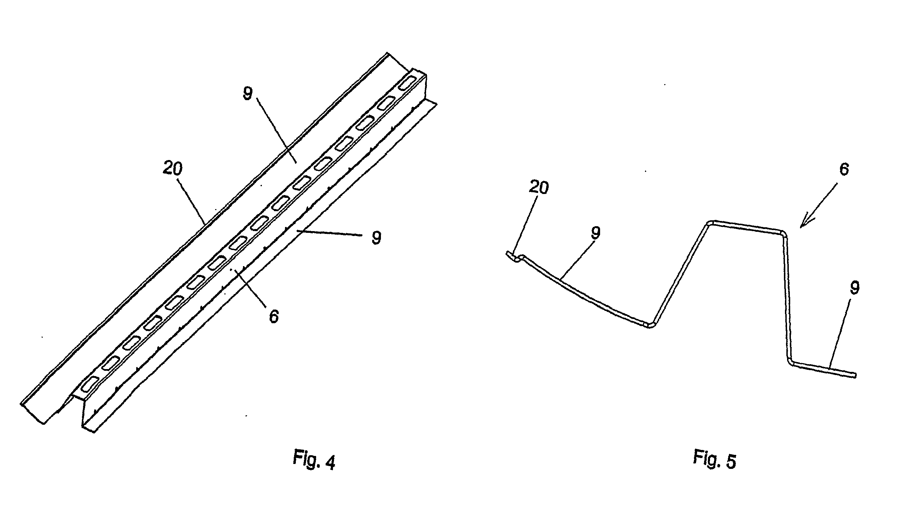

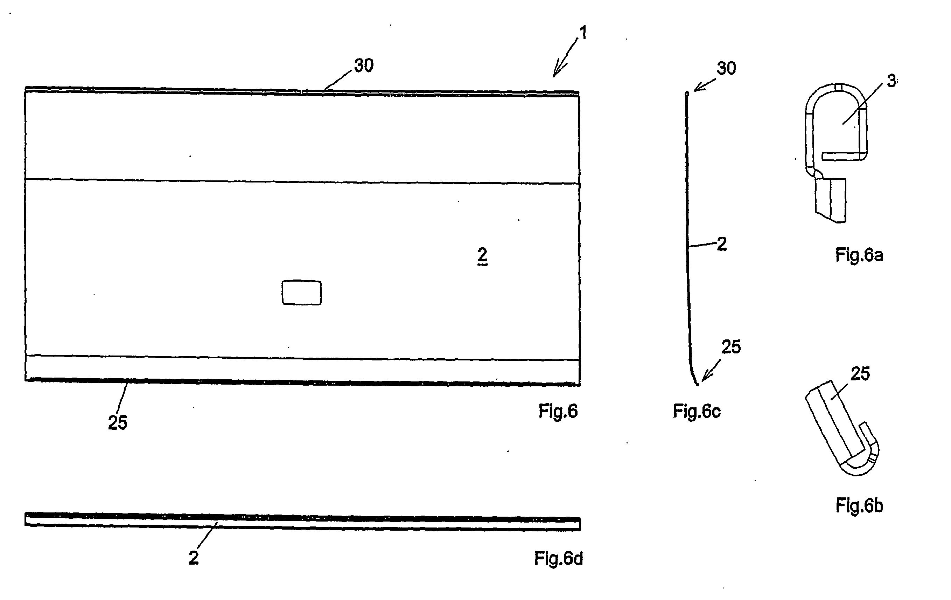

Die Längslasche 9 des in Fig. 5 im Schnitt dargestellten unteren Versteifungsteils greift mit einer z-artigen Abbiegung 20 unter die u-förmige Falzung 25, die in Fig. 6 dargestellt ist, wodurch neben der Verklebung in diesem Bereich eine formschlüssige Verbindung geschaffen wird. Im Bereich der Unterkante 30 der Außenhautplatte 2 ist eine Abrundung vorgesehen, in die sich der mit der z-artigen Abbildung 20 versehene Längslaschenbereich 9 des unteren Versteifungselementes gemäß Fig. 5 einschmiegt.

In Fig. 6a ist ein ringartiger Falz 35 dargestellt, der eine Achse eines Scharniers aufnehmen kann. Der Schwenkteil des Scharniers ist damit einstückig mit der Karosserieklappe verbunden.

Die Karosserieklappe 100 gemäß den Zeichnungsfiguren 11-17 besteht aus einer Außenhautplatte 102 und einem einstückigen Versteifungselement 108, das aus einem vorgestanzten Blech durch einen Biege-/Kantvorgang gebildet wird. Das Versteifungselement 108 weist sechs nebeneinanderliegende kastenartige Hutprofile 110 auf, die im Bereich ihrer Klebeflächen 112 ineinander übergehen, wodurch die Einstückigkeit dieses Teils gewährleistet wird. Ein einstückiges Teil ist einfacher zu montieren, insbesondere zu verkleben, da weniger Teile zueinander ausgerichtet und miteinander verpreßt werden müssen.

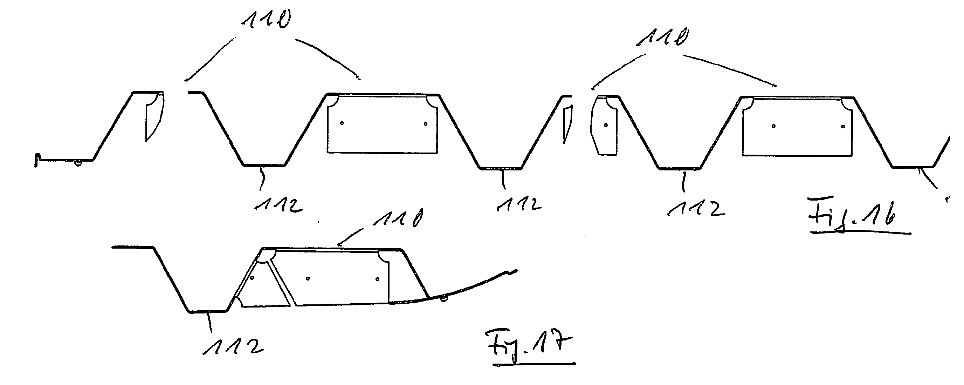

In Fig. 16/17 ist noch einmal ein Querschnitt dargestellt, bei welchem die hutprofilartige Struktur des Teils 108 besonders deutlich sichtbar wird.

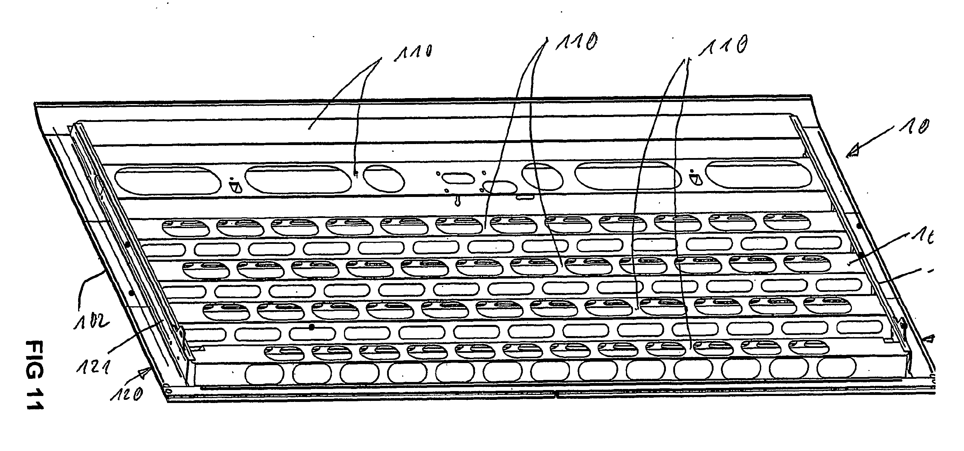

Wie in Fig. 11 dargestellt, ist im Seitenkantenbereich 120 jeweils noch ein Winkelelement 121 vorgesehen, das zur weiteren Aussteifung der Karosserieklappe 100 beiträgt.

Im übrigen sei angemerkt, daß auch das einstückige Versteifungselement in Abkantungen und Falzungen der Außenhautplatte eingreifen kann, um neben einer Klebeverbindung auch eine Formschlußverbindung herzustellen. Diesbezüglich ist auf die Detailfiguren 6a - 6c Bezug zu nehmen.

## Patentansprüche

1. Karosserieklappe (1) für Kraftfahrzeuge, insbesondere für Reisebusse und dergleichen, bestehend aus einer Außenhautplatte (2) und daran angeordneten Versteifungselementen (3 - 8), die mit mindestens einer Seite der Außenhautplatte (2) verbunden sind, wobei die Außenhautplatte (2) aus einem Blechstanzteil gebildet wird, das im Randbereich zumindest abschnittsweise abgekantet oder gefalzt ist,
**dadurch gekennzeichnet, daß**
die Versteifungselemente (3 - 8) ebenfalls aus einem oder mehreren Blechstanzteil(en) gebildet sind, die nach einem Biege-/Kantvorgang zumindest teilweise nach Art langgestreckter Kästen ausgebildet sind und im Anlagebereich zur Außenhautplatte (2) mit nach außen abstehenden Klebeflächen bildenden Längslaschen (9) versehen sind, die im Endmontagezustand der Karosserieklappe (1) flächig mit Innenbereichen der Außenhautplatte (2) verklebt sind.

2. Karosserieklappe nach Anspruch 1,
**dadurch gekennzeichnet, daß**
mehrere Versteifungselemente (3 - 8) einstückig durch ein vorgestanztes, in Mittelbereichen nach dem Biege- oder Kantvorgang mehrere langgestreckte Kästen bildenden Blechstanzteil gebildet werden, wobei die nach außen abstehenden Klebeflächen bildenden Längslaschen (9) der langgestreckten Kästen einstückig ineinander übergehen.

3. Karosserieklappe nach Anspruch 1,
**dadurch gekennzeichnet, daß**
die langgestreckten Kästen lediglich im Randbereich einstückig miteinander verbunden sind.

4. Karosserieklappe nach einem der vorhergehenden Ansprüche,
**dadurch gekennzeichnet, daß**
ein Teil der Versteifungselemente (3 - 8) im Querschnitt etwa Ω-förmig ausgebildet ist.

5. Karosserieklappe nach einem der vorhergehenden Ansprüche,
**dadurch gekennzeichnet, daß**
die Versteifungselemente (3 - 8) aus demselben Blechmaterial wie die Außenhautplatte (2) gebildet sind.

6. Karosserieklappe nach einem der vorhergehenden Ansprüche,
**dadurch gekennzeichnet, daß**
die Außenhautplatte (2) und die Versteifungselemente (3 - 8) aus einem Aluminiumblech gebildete Stanzteile sind.

7. Karosserieklappe nach einem der vorhergehenden Ansprüche,
**dadurch gekennzeichnet, daß**
eine Längslasche (9) eines im Randbereich der Karosserieklappe (1) angeordneten Versteifungselementes formschlußbildend in eine u-förmige Falzung (25) der Außenhautplatte (2) eingreift.

8. Karosserieklappe nach einem der vorhergehenden Ansprüche,
**dadurch gekennzeichnet, daß**
die Außenhautplatte (2) in ihrem Scharnierbereich einen ringartigen Falz (35) aufweist, dessen freie nach innen weisende Falzkante durch eine 1-förmige Abkantung eines weiteren Versteifungselementes beaufschlagt ist.

9. Karosserieklappe nach einem der vorhergehenden Ansprüche,
**dadurch gekennzeichnet, daß**
die Unterkante der Außenhautplatte (2) mit einer Abrundung versehen ist, in welche eine entsprechend abgerundete Längslasche (9) eines unteren Rahmenteils flächig eingeklebt ist.

10. Karosserieklappe nach einem der vorhergehenden Ansprüche,
**dadurch gekennzeichnet, daß**
im Mittelbereich der Außenhautplatte (2) ein querverlaufendes kastenartiges Versteifungselement eingeklebt ist.

11. Karosserieklappe nach einem der vorhergehenden Ansprüche,
**dadurch gekennzeichnet, daß**
die Unterkante der Außenhautplatte (2) mit einem u-förmigen Biegefalz (25) versehen ist, dessen Innenweite etwa der Stärke der Längslasche (9) des unteren Versteifungselementes entspricht und das freie Ende der gebogenen Längslasche des unteren Versteifungselementes in der Umbiegung mit Formschluß einliegt.

12. Karosserieklappe nach einem der vorhergehenden Ansprüche,
**dadurch gekennzeichnet, daß**
die Seitenkanten der Außenhautplatte (2) mit Abkantungen versehen sind.

13. Karosserieklappe nach einem der vorhergehenden Ansprüche,
**dadurch gekennzeichnet, daß**
die oberen, die mittleren und die unteren Versteifungselemente (3 - 8) kürzer ausgebildet sind als die Gesamtbreite der Außenhautplatte (2) und im Seitenkantenbereich der Außenhautplatte (2) Seitenversteifungselemente angeordnet sind, die stoßweise mit den Enden der oberen, mittleren und unteren Versteifungselemente (3 - 8) verklebt sind.

14. Karosserieklappe nach einem der vorhergehenden Ansprüche,
**dadurch gekennzeichnet, daß**
die Seitenversteifungselemente winkelartig ausgebildet sind und einer der Winkel eine zur Verklebung dienende Längslasche (9) bildet, die mit ihrer freien Kante in einer Seitenabkantung der Außenhautplatte (2) einliegt.

15. Karosserieklappe nach einem der vorhergehenden Ansprüche,
**dadurch gekennzeichnet, daß**
die Elemente der Karosserieklappe (1) ausschließlich durch Verklebung und im Kantenbereich teilweise durch Formschluß miteinander verbunden sind.

16. Karosserieklappe nach einem der vorhergehenden Ansprüche,
**dadurch gekennzeichnet, daß**
sowohl Materialstärke der aus Aluminium bestehenden Außenhautplatte (2) als auch die Materialstärke der durch Blechstanzteile gebildeten Versteifungselemente 1,5 mm beträgt.

17. Karosserieklappe nach einem der vorhergehenden Ansprüche,
**dadurch gekennzeichnet, daß**
das im Scharnierbereich angeordnete obere Versteifungselement durch ein Blechstanzteil mit einer Blechstärke von 1 mm gebildet ist.

18. Verfahren zur Herstellung einer Karosserieklappe für Kraftfahrzeuge, insbesondere einer Reisebuskarosserieklappe,
**gekennzeichnet durch**
folgende Verfahrensschritte:
a. Vorsehen eines plattenartigen Aluminiumblechmaterials;
b. Stanzen einer Außenhaut aus dem Blechmaterial;
c. Stanzen von Versteifungselementen aus dem Blechmaterial;
d. Biegen der Versteifungselemente in kastenartige oder winkelartige Versteifungsprofile derart, daß von den Kastenseitenwandungen Klebeflächen bildende Längslaschen abstehen bzw. ein Winkelschenkel zur Bildung einer Klebefläche dient;
e. Abkanten oder Falzen der Kanten der Außenhautplatte in einer Kant-Biegevorrichtung und Anbringen einer Biege-/Rundung in den unteren Bereich der Karosserieklappe;
f. Pulverbeschichtung aller Teile, nämlich Chromatieren und Pulverbeschichten;
g. Einlegen der Außenhautplatte in eine Montagehalterung;
h. Einlegen und Verkleben der Versteifungselemente, wobei zunächst die Längsversteifungselemente und nachfolgend die Versteifungselemente im Seitenbereich der Außenhautplatte eingeklebt werden und zwischen einem unteren Querversteifungselement und der Unterkante der Außenhautplatte ein Formschluß gebildet wird.

## Claims

1. Chassis hatch (1) for motor vehicles, especially for touring coaches and similar, comprising a bodyshell panel (2) provided with reinforcement elements (3 - 8) which are connected to at least one side of the bodyshell panel (2), whereas the bodyshell panel (2) consists of a metal sheet stamping part, whereas at least sections of the outer area of the metal sheet stamping part are folded or bent,
**characterized in that**
the reinforcement elements (3 - 8) consist likewise of one or several metal sheet stamping part(s) having at least partially the form of elongated boxes after a folding or bending process, the sections abutting on the bodyshell panel (2) are provided with protruding longitudinal flaps (9) having adhesive surfaces which, after final assembly of the chassis hatch (1), are superficially glued together with inner sections of the bodyshell panel (2).

2. Chassis hatch according to claim 1,
**characterized in that**
several reinforcement elements (3 - 8) consist of a one-piece pre-cut metal sheet stamping part having in its middle sections after the bending or folding process the form of several elongated boxes, whereas the adhesive surfaces of the protruding longitudinal flaps (9) of the elongated boxes merge as one piece into each other.

3. Chassis hatch according to claim 1,
**characterized in that**
the elongated boxes are only connected in the outer area with each other as one piece.

4. Chassis hatch according to one of the preceding claims,
**characterized in that**
the cross section of several reinforcement elements (3 - 8) is more or less Ω-shaped.

5. Chassis hatch according to one of the preceding claims,
**characterized in that**
the reinforcement elements (3 - 8) consist of the same metal sheet material as the bodyshell panel (2).

6. Chassis hatch according to one of the preceding claims,
**characterized in that**
the bodyshell panel (2) and the reinforcement elements (3 - 8) are stamping parts formed by aluminium sheet material.

7. Chassis hatch according to one of the preceding claims,
**characterized in that**
a longitudinal flap (9) of a reinforcement element arranged in the outer area of the chassis hatch (1) is positively engaging in a u-shaped folding (25) of the bodyshell panel (2).

8. Chassis hatch according to one of the preceding claims,
**characterized in that**
the bodyshell panel (2) is in its hinge area provided with an annular folding (35) whose free inner folded edge is brought into contact with an 1-shaped folding of a further reinforcement element.

9. Chassis hatch according to one of the preceding claims,
**characterized in that**
the bottom edge of the bodyshell panel (2) is rounded and the inner side of the rounded edge is superficially glued together with a correspondingly rounded longitudinal flap (9) of a lower frame part.

10. Chassis hatch according to one of the preceding claims,
**characterized in that**
a transverse box-like reinforcement element is glued in the middle section of the bodyshell panel (2).

11. Chassis hatch according to one of the preceding claims,
**characterized in that**
the bottom edge of the bodyshell panel (2) is provided with a u-shaped folding (25) whose inner dimension corresponds approximately to the thickness of the longitudinal flap (9) of the lower reinforcement element and the free end of the bent longitudinal flap of the lower reinforcement element is positively engaging with the folding.

12. Chassis hatch according to one of the preceding claims,
**characterized in that**
the side edges of the bodyshell panel (2) are provided with folded edges.

13. Chassis hatch according to one of the preceding claims,
**characterized in that**
the upper, middle and lower reinforcement elements (3 - 8) are shorter than the overall width of the bodyshell panel (2) and side reinforcement elements are arranged in the side edge area of the bodyshell panel (2), the side reinforcement elements being glued together in an intermittent manner with the ends of the upper, middle and lower reinforcement elements (3 - 8).

14. Chassis hatch according to one of the preceding claims,
**characterized in that**
the side reinforcement elements have the shape of an angle and one of the angles forms a longitudinal flap (9) for adhesive bonding and the free end of the longitudinal flap is positively engaging with a side folded edge of the bodyshell panel (2).

15. Chassis hatch according to one of the preceding claims,
**characterized in that**
the elements of the chassis hatch (1) are exclusively connected with each other by adhesive bonding and in the edge area partially by positive engagement.

16. Chassis hatch according to one of the preceding claims,
**characterized in that**
the thickness of the material of the aluminium bodyshell panel (2) as well as the thickness of the material of the reinforcement elements consisting of metal sheet stamping parts amounts to 1.5 mm.

17. Chassis hatch according to one of the preceding claims,
**characterized in that**
the upper reinforcement element arranged in the hinge area is formed by a stamping part made of metal sheet having a thickness of 1 mm.

18. Method for manufacturing a chassis hatch for motor vehicles, especially a chassis hatch for touring coaches,
**characterized by** the following steps:
a. Providing a plate-like aluminium sheet material;
b. stamping of a bodyshell out of the sheet material;
c. stamping of reinforcement elements out of the sheet material;
d. bending of reinforcement elements forming box-like or angle-like reinforcement profiles in such a way that longitudinal flaps provided with adhesive surfaces protrude from the box side walls or that an angle leg serves for providing an adhesive surface;
e. bending or folding the edges of the bodyshell panel using a device for folding or bending and applying a bending/rounding process in the lower section of the chassis hatch;
f. powder coating of all parts, namely chromizing and powder coating;
g. insertion of the bodyshell panel into a mounting assembly;
h. insertion and gluing of the reinforcement elements, whereas first the longitudinal reinforcement elements and subsequently the reinforcement elements in the side area of the bodyshell panel are glued and positive engagement between a lower cross reinforcement element and the bottom edge of the bodyshell panel.

## Revendications

1. Trappe de carrosserie (1) pour véhicules automobiles, notamment pour autocars et similaires, constituée d'une plaque principale extérieure (2) et d'éléments de renforcement (3 à 8) qui sont disposés sur cette plaque et qui sont assemblés à au moins une face de la plaque principale extérieure (2), sachant que la plaque principale extérieure (2) est formée à partir d'une pièce de tôle découpée à la presse, qui est repliée ou pliée au moins par endroits dans la zone de bord,
**caractérisée en ce que** les éléments de renforcement (3 à 8) sont également formés à partir d'une ou plusieurs pièces de tôle découpées à la presse qui, après un processus de cintrage/pliage, sont réalisées au moins en partie à la manière de caissons oblongs et sont pourvues, dans la région d'application avec la plaque principale extérieure (2), de pattes longitudinales (9) formant des surfaces de collage en saillie vers l'extérieur, pattes qui, dans l'état de montage final de la trappe de carrosserie (1), sont assemblées par collage surfacique à des régions intérieures de la plaque principale extérieure (2).

2. Trappe de carrosserie selon la revendication 1, **caractérisée en ce que** plusieurs éléments de renforcement (3 à 8) sont formés d'un seul tenant par une pièce de tôle prédécoupée à la presse, formant dans des régions médianes plusieurs caissons oblongs à la suite du processus de cintrage ou de pliage, sachant que les pattes longitudinales (9) des caissons oblongs qui forment des surfaces de collage en saillie vers l'extérieur se raccordent d'un seul tenant les unes aux autres.

3. Trappe de carrosserie selon la revendication 1, **caractérisée en ce que** les caissons oblongs sont reliés entre eux d'un seul tenant uniquement dans la région de bord.

4. Trappe de carrosserie selon l'une des revendications précédentes, **caractérisée en ce qu'**une partie des éléments de renforcement (3 à 8) sont réalisés avec une section approximativement en forme de Ω.

5. Trappe de carrosserie selon l'une des revendications précédentes, **caractérisée en ce que** les éléments de renforcement (3 à 8) sont formés à partir de la même matière de tôle que la plaque principale extérieure (2).

6. Trappe de carrosserie selon l'une des revendications précédentes, **caractérisée en ce que** la plaque principale extérieure (2) et les éléments de renforcement (3 à 8) sont des pièces découpées à la presse formées à partir d'une tôle d'aluminium.

7. Trappe de carrosserie selon l'une des revendications précédentes, **caractérisée en ce qu'**une patte longitudinale (9) d'un élément de renforcement disposé dans la région de bord de la trappe de carrosserie (1) s'engage dans une pliure en U (25) de la plaque principale extérieure (2) en formant un engagement positif.

8. Trappe de carrosserie selon l'une des revendications précédentes, **caractérisée en ce que** la plaque principale extérieure (2) présente dans sa région de charnière une pliure annulaire (35) dont l'arête de pliage libre, dirigée vers l'intérieur, est sollicitée par un repliage en 1 d'un autre élément de renforcement.

9. Trappe de carrosserie selon l'une des revendications précédentes, **caractérisée en ce que** l'arête inférieure de la plaque principale extérieure (2) est pourvue d'un arrondi dans lequel est collée surfaciquement une patte longitudinale (9), arrondie d'une manière correspondante, d'un élément de châssis inférieur.

10. Trappe de carrosserie selon l'une des revendications précédentes, **caractérisée en ce qu'**un élément de renforcement du genre caisson, s'étendant transversalement, est collé dans la région médiane de la plaque principale extérieure (2).

11. Trappe de carrosserie selon l'une des revendications précédentes, **caractérisée en ce que** l'arête inférieure de la plaque principale extérieure (2) est pourvue d'une pliure en U (25) dont la largeur intérieure correspond approximativement à l'épaisseur de la patte longitudinale (9) de l'élément de renforcement inférieur, et l'extrémité libre de la patte longitudinale recourbée de l'élément de renforcement inférieur s'insère en engagement positif dans la pliure.

12. Trappe de carrosserie selon l'une des revendications précédentes, **caractérisée en ce que** les arêtes latérales de la plaque principale extérieure (2) sont pourvues de repliages.

13. Trappe de carrosserie selon l'une des revendications précédentes, **caractérisée en ce que** les éléments de renforcement (3 à 8) supérieurs, médians et inférieurs sont réalisés plus courts que la largeur totale de la plaque principale extérieure (2), et des éléments de renforcement latéraux sont disposés dans la région des arêtes latérales de la plaque principale extérieure (2), lesquels sont assemblés par collage en aboutement aux extrémités des éléments de renforcement (3 à 8) supérieurs, médians et inférieurs.

14. Trappe de carrosserie selon l'une des revendications précédentes, **caractérisée en ce que** les éléments de renforcement latéraux sont réalisés du genre cornières et une des cornières forme une patte longitudinale (9) servant à l'assemblage par collage, qui s'insère par son arête libre dans un repliage latéral de la plaque principale extérieure (2).

15. Trappe de carrosserie selon l'une des revendications précédentes, **caractérisée en ce que** les éléments de la trappe de carrosserie (1) sont assemblés entre eux exclusivement par collage, et en partie par engagement positif dans la région des arêtes.

16. Trappe de carrosserie selon l'une des revendications précédentes, **caractérisée en ce que** tant l'épaisseur de matériau de la plaque principale extérieure (2) constituée d'aluminium que l'épaisseur de matériau des éléments de renforcement formés par des pièces de tôle découpées à la presse est de 1,5 mm.

17. Trappe de carrosserie selon l'une des revendications précédentes, **caractérisée en ce que** l'élément de renforcement supérieur, disposé dans la région de charnière, est formé par une pièce de tôle découpée à la presse ayant une épaisseur de tôle de 1 mm.

18. Procédé de fabrication d'une trappe de carrosserie pour des véhicules automobiles, notamment d'une trappe de carrosserie d'autocar, **caractérisé par** les étapes suivantes :
a. fourniture d'une tôle d'aluminium du genre plaque ;
b. découpage à la presse d'une enveloppe extérieure dans la tôle ;
c. découpage à la presse d'éléments de renforcement dans la tôle ;
d. cintrage des éléments de renforcement en profilés de renforcement du genre caissons ou cornières, de telle sorte que des pattes longitudinales formant des surfaces de collage font saillie des parois latérales du caisson, ou respectivement qu'une branche de cornière sert à former une surface de collage ;
e. repliage ou pliage des arêtes de la plaque principale extérieure dans un dispositif de pliage/cintrage, et réalisation d'un cintrage/arrondi dans la région inférieure de la trappe de carrosserie ;
f. revêtement par poudre de toutes les pièces, à savoir chromatation et revêtement par poudre ;
g. insertion de la plaque principale extérieure dans un support de montage ;
h. insertion et collage des éléments de renforcement, sachant qu'on colle d'abord les éléments de renforcement longitudinaux puis les éléments de renforcement dans la région des côtés de la plaque principale extérieure, et qu'un engagement positif est formé entre un élément de renforcement transversal inférieur et l'arête inférieure de la plaque principale extérieure.
